(19) **Europäisches Patentamt / European Patent Office / Office européen des brevets**

(11) **EP 4 730 457 A1**

(12) # EUROPEAN PATENT APPLICATION

(43) Date of publication:
22.04.2026 Bulletin 2026/17

(21) Application number: 25209267.1

(22) Date of filing: 16.10.2025

(51) International Patent Classification (IPC):
$H01M\ 10/04$ (2006.01)   $H01M\ 10/0587$ (2010.01)
$H01M\ 50/179$ (2021.01)   $H01M\ 50/533$ (2021.01)
$H01M\ 50/538$ (2021.01)

(52) Cooperative Patent Classification (CPC):
H01M 10/0422; H01M 10/0431; H01M 10/0587;
H01M 50/179; H01M 50/533; H01M 50/538

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 21.10.2024 KR 20240143963

(71) Applicant: SK On Co., Ltd.
Seoul 03161 (KR)

(72) Inventor: SHIN, In Yong
34124 Daejeon (KR)

(74) Representative: Prüfer & Partner mbB
Patentanwälte · Rechtsanwälte
Sohnckestraße 12
81479 München (DE)

(54) **ELECTRODE ASSEMBLY AND BATTERY CELL INCLUDING THE SAME**

(57) The present disclosure relates to an electrode assembly and a battery cell including the same, the electrode assembly comprising: a first electrode plate on which any one active material is stacked, a first electrode including a plurality of first flags respectively extending from the first electrode plate, a second electrode including a second electrode plate on which the other active material is stacked, and a separator disposed between the first electrode and the second electrode, wherein the first electrode, the separator, and the second electrode are wound around a virtual central axis, wherein the plurality of first flags respectively extend parallel to the central axis, and wherein an angle between any one of the first flags among the plurality of first flags and another first flag adjacent to the any one of the first flags increases as approaching the central axis along a spiral direction.

FIG. 5A

EP 4 730 457 A1

**Description**

BACKGROUND OF THE INVENTION

1. Field

Embodiments of the present disclosure relates to an electrode assembly and a battery cell including the same. More particularly, the present disclosure relates to an electrode assembly for reducing a weight of a battery cell and a battery cell including the same.

2. Description of the Related Art

A conventional cylindrical battery cell (or secondary battery) includes an electrode assembly (or jelly roll) in which a positive electrode, a separator, and a negative electrode are sequentially stacked and wound around a central axis. In this case, the electrode assembly connects a plurality of flags respectively formed on the positive electrode and the negative electrode to a positive current collector and a negative current collector by bending the plurality of flags.

Generally, a plurality of flags are formed by partially cutting the positive electrode and the negative electrode in a direction parallel to the central axis. The plurality of cut flags are bent toward the central axis, and at this time, the plurality of flags may overlap each other. However, as a winding length of the electrode assembly becomes longer, an overlapping portion of the plurality of flags unnecessarily increases, so that a thickness of the overlapping portion of the plurality of flags becomes thicker. This eventually unnecessarily increases a weight of the electrode assembly and decreases energy density per unit mass. In addition, due to the thickened overlapping portion, a bent shape of the plurality of flags may not be stably maintained.

SUMMARY OF THE INVENTION

According to one aspect of the present disclosure, a problem to be solved is to improve manufacturing efficiency of an electrode assembly and/or a battery cell.

According to another aspect of the present disclosure, a problem to be solved is to reduce a weight of an electrode assembly and/or a battery cell.

According to another aspect of the present disclosure, a problem to be solved is to increase energy density per unit mass of an electrode assembly and/or a battery cell.

According to another aspect of the present disclosure, a problem to be solved is to stably maintain a bent shape of a plurality of flags.

According to another aspect of the present disclosure, a problem to be solved is to provide an electrode assembly in which a relationship between an angle between adjacent flags and other physical variables is applied according to an equation.

Meanwhile, the electrode assembly according to the present disclosure and a battery cell including the same may be widely applied to fields of green technology such as an electric vehicle, a battery charging station, an energy storage system (ESS), photovoltaics using battery cells, and wind power. In addition, the electrode assembly according to the present disclosure and a battery cell including the same may be used in eco-friendly mobility including electric vehicles and hybrid vehicles to prevent climate change by suppressing air pollution and greenhouse gas emissions.

As a technical means to achieve the technical objects, an electrode assembly according to the present disclosure may comprise: a first electrode including a plurality of first flags respectively extending from a first electrode plate on which any one active material is stacked; a second electrode including a second electrode plate on which the other active material is stacked; and a separator disposed between the first electrode and the second electrode, wherein the first electrode, the separator, and the second electrode are wound around a virtual central axis, wherein the plurality of first flags respectively extend parallel to the central axis, and wherein an angle between any one of the first flags among the plurality of first flags and another first flag adjacent to the any one of the first flags may increase as approaching the central axis along a spiral direction, which is a winding direction of the first electrode.

In one embodiment, the second electrode may further include a plurality of second flags extending from the second electrode plate in a direction opposite to a direction in which the plurality of first flags extend, and being bent toward the central axis.

In one embodiment, the first electrode plate may include a first region in which any one active material is stacked to face the separator; and a second region formed between the plurality of first flags and the first region, the first electrode plate being exposed in the second region to face the separator.

In one embodiment, a height h1 of the second region at a first portion adjacent to the central axis may be smaller than a height h2 of the second region at a second portion located farther from the central axis than the first portion.

In one embodiment, each of the plurality of first flags may include: a first edge portion extending obliquely with respect to the central axis; a second edge portion extending parallel to the central axis; a third edge portion connected to the first edge portion and the second edge portion along the spiral direction; and a connection edge portion connecting the second region and the plurality of first flags.

In one embodiment, the angle may be an angle between a second edge portion of any one of the first flags and a first edge portion of a first flag adjacent to the any one of the first flags.

In one embodiment, lengths of the connection edge portions of the plurality of first flags may be the same.

In one embodiment, the first edge portion may be closer to the central axis than the second edge portion along the spiral direction.

In one embodiment, heights of the plurality of first flags may be the same.

In one embodiment, an angle $\theta$ between any one of the first flags and a first flag adjacent to the any one of the first flags may be set according to the following Equation 1.

[Equation 1]

$$\theta = arctan\left(\frac{d_n}{\sqrt{\frac{tL_n}{\pi} + R_0{}^2}}\right)$$

In the Equation 1, $L_n$ (n is a natural number) is a length from one end of the first electrode plate, which is closer to the central axis among both ends of the first electrode plate, to an n-th first flag disposed thereon; $R_0$ is a radius from the central axis to one end of the first electrode plate, which is closer to the central axis among both ends of the first electrode plate, when the first electrode plate is wound around the central axis; $d_n$ is a length connected between the n-th disposed first flag and the first electrode plate; and t is a sum of thicknesses of the first electrode, the second electrode, and the separator.

In one embodiment, an angle $\theta$ between any one of the first flags and a first flag adjacent to the any one of the first flags may vary according to a length $L_n$ from one end of the first electrode plate, which is closer to the central axis among both ends of the first electrode plate, to an n-th first flag disposed thereon (n is a natural number).

Meanwhile, an electrode assembly according to the present disclosure may include: a first electrode including a plurality of first flags respectively extending from a first electrode plate on which any one active material is stacked; a second electrode including a second electrode plate on which the other active material is stacked; and a separator disposed between the first electrode and the second electrode. The first electrode, the separator, and the second electrode are wound around a virtual central axis, the plurality of first flags respectively extend parallel to the central axis, and an angle between a pair of adjacent first flags among the plurality of first flags at a first portion adjacent to the central axis along a spiral direction, which is a winding direction of the first electrode, may be greater than an angle between a pair of adjacent first flags at a second portion located farther from the central axis than the first portion.

In one embodiment, the angle between a pair of adjacent first flags among the plurality of first flags may increase from the second portion toward the first portion.

In one embodiment, the plurality of first flags may be partitioned into a plurality of first flag groups by grouping adjacent first flags by a predetermined number, an angle between a pair of first flags included in the same first flag group among the plurality of first flag groups may be the same, and an angle between a pair of first flags included in any one first flag group may increase toward the central axis.

Meanwhile, an electrode assembly according to the present disclosure may include: a first electrode including a plurality of first flags respectively extending from a first electrode plate on which any one active material is stacked; a second electrode including a second electrode plate on which the other active material is stacked; and a separator disposed between the first electrode and the second electrode. The first electrode, the separator, and the second electrode are wound around a virtual central axis, and each of the plurality of first flags may include a first edge portion extending obliquely with respect to the central axis and a second edge portion extending parallel to the central axis. Each of the plurality of first flags may be bent such that the first edge portion and the second edge portion face the central axis, and an angle formed by the first edge portion and the second edge portion with respect to the central axis may increase as approaching the central axis along a spiral direction, which is a winding direction of the first electrode.

In one embodiment, the electrode assembly according to the present disclosure may further include a first current collector electrically connecting the plurality of first flags and a terminal portion.

In one embodiment, the plurality of first flags and the first current collector may be bonded to each other by welding.

In one embodiment, the electrode assembly according to the present disclosure may further include a second current collector which is located in a direction opposite to the first current collector with the first electrode, the second electrode, and the separator interposed therebetween, and electrically connected to the second electrode.

In one embodiment, the second electrode may further include a plurality of second flags extending from the second electrode plate in a direction opposite to a direction in which the plurality of first flags extend, and the plurality of second flags may be bent toward the central axis and electrically connected to the second current collector.

In one embodiment, any one of the first flags among the plurality of first flags and another first flag adjacent to the any one of the first flags may be bent to form a coplanar surface with each other.

Meanwhile, a battery cell according to the present disclosure may include: a case accommodating the electrode assembly; a through-hole penetrating one surface of the case along the central axis; and a terminal portion inserted into the through-hole and electrically connecting the electrode assembly to the outside.

According to one embodiment of the present disclosure, manufacturing efficiency of an electrode assembly and/or a battery cell can be improved.

According to another embodiment of the present disclosure, a weight of an electrode assembly and/or a battery cell can be reduced.

According to another embodiment of the present disclosure, energy density per unit mass of an electrode assembly and/or a battery cell can be increased.

According to another embodiment of the present disclosure, a bent shape of a plurality of flags can be stably maintained.

According to another embodiment of the present disclosure, an electrode assembly in which a relationship between an angle between adjacent flags and other physical variables is applied according to an equation can be provided.

BRIEF DESCRIPTION OF THE DRAWINGS

FIG. 1 is an example of a battery cell according to the present disclosure.

FIG. 2 illustrates a cross-section of a battery cell according to the present disclosure.

FIG. 3 is an example of an electrode assembly according to the present disclosure before the first flags and the second flags are bent.

FIG. 4 illustrates an outline of an electrode assembly according to the present disclosure viewed from one direction.

FIG. 5A is an enlarged view of a first portion adjacent to the central axis among the first electrode.

FIG. 5B is an enlarged view of a second portion located farther from the central axis than the first portion among the first electrode.

FIG. 6A illustrates the first flags bent toward the central axis at the first portion.

FIG. 6B illustrates the first flags bent toward the central axis at the second portion.

FIG. 7 is another example of the first electrode according to the present disclosure.

DETAILED DESCRIPTION

Hereinafter, preferred embodiments of the present disclosure will be described in detail with reference to the accompanying drawings. The configuration of the device or the control method described below is merely for explaining embodiments of the present disclosure and not intended to limit a scope of the present disclosure, and reference numerals used consistently throughout the specification denote the same elements.

In the present disclosure, the terms battery, secondary battery, or cell are used as terms having the same meaning as a battery cell.

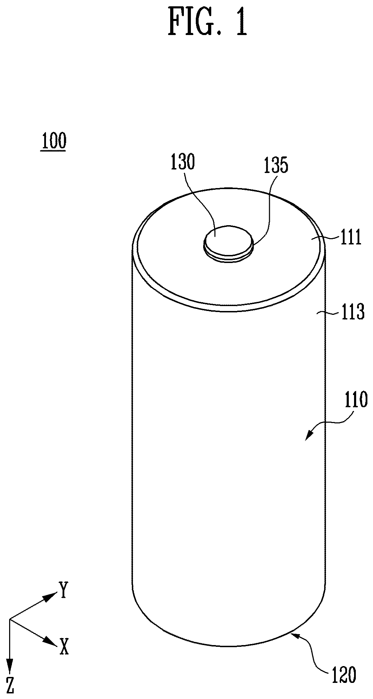

FIG. 1 is an example of a battery cell according to the present disclosure.

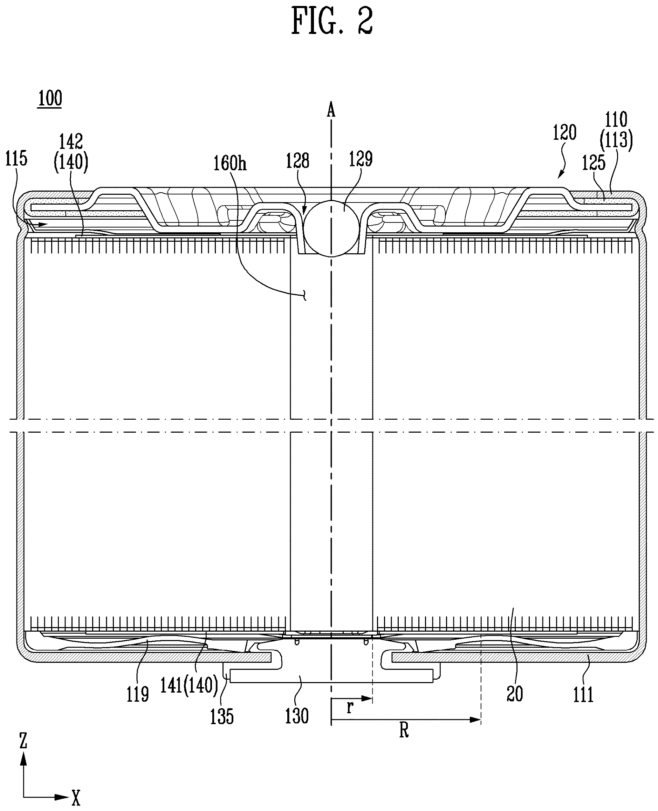

Referring to FIG. 1, a battery cell 100 manufactured by a battery manufacturing apparatus according to the present disclosure may comprise: a case 110, 120 accommodating an electrode assembly 20 (see FIG. 2) that produces or stores electric energy; and a terminal portion 130 electrically connected to the electrode assembly 20 and protruding outward.

The case 110, 120 may form an outer shape of the battery cell 100. FIG. 1 illustrates an example in which the case 110, 120 is cylindrical, but a shape of the battery cell is not limited thereto in the present disclosure. That is, the battery cell 100 according to the present disclosure may be a prismatic battery cell 100, a pouch-type battery cell 100, or another type of battery cell 100.

The case 110, 120 may include an opening 115 (see FIG. 2) at one end, a housing 110 accommodating the electrode assembly 20 through the opening 115 and, referring to FIG. 1, the opening 115 may be located in a direction opposite to the terminal portion 130. In addition, the battery cell 100 may include a cap assembly 120 coupled to the housing 110 and closing the opening 115.

That is, the housing 110 may be formed into a cup shape from a circular disc using a deep drawing method. Accordingly, the opening 115 may be formed on one surface of the housing 110, and another surface of the housing 110 opposite to the opening 115 may be in a closed form.

The housing 110 may include a side portion 113 forming a circumferential surface and a flat portion 111 forming the other end of the housing 110.

The terminal portion 130 may be located on one surface (or the flat portion 111) of the housing 110 facing the opening 115 or the cap assembly 120. The battery cell 100 may further include a through-hole (not shown) penetrating the flat portion 111, and at least a part of the terminal portion 130 may be inserted into the through-hole.

The battery cell 100 according to the present disclosure may further include a gasket 135 positioned between the terminal portion 130 and the through-hole to electrically insulate the terminal portion 130 from the case 110, 120.

In one embodiment, the gasket 135 may be disposed between the housing 110 and the terminal portion 130. For example, the gasket 135 may be disposed between the flat portion 111 and the terminal portion 130. The gasket 135 may include an electrically insulating material. The insulating material means a material having low electrical conductivity. In one example, the insulating material may be any one of a polymer, a ceramic, or a combination thereof.

FIG. 2 illustrates a cross-section of a battery cell according to the present disclosure.

More specifically, FIG. 2 illustrates a cross-section of a region adjacent to the cap assembly 120 covering the opening 115 and a region adjacent to the other surface or the flat portion 111 of the housing 110.

The battery cell 100 may accommodate an electrode assembly 20 therein. The electrode assembly 20 may be in a form corresponding to the cylindrical housing 110 or the side portion 113.

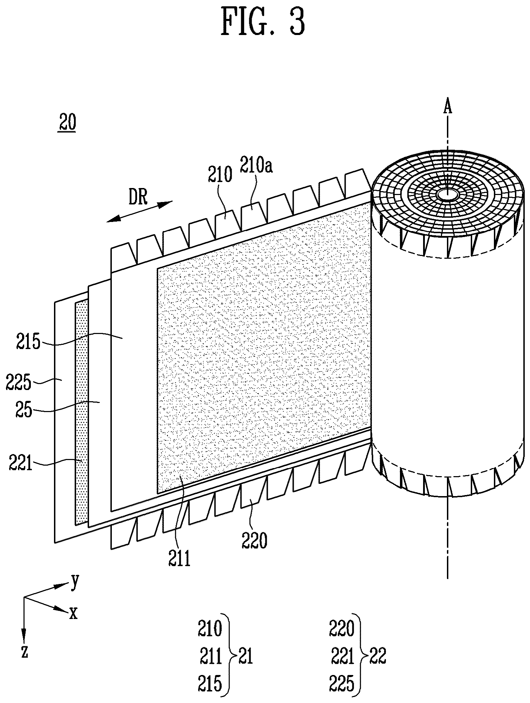

That is, the electrode assembly 20 may be in a roll form wound around a central axis A, the electrode assembly including a first electrode 21 (see FIG. 3), a second electrode 22 (see FIG. 3), and a separator 25 (see FIG. 3) disposed between the first electrode 21 and the second electrode 22.

Accordingly, the housing 110 and the electrode assembly 20 may share the central axis A.

In addition, the electrode assembly 20 may include a central hole 160h in a region adjacent to the central axis A. As the electrode assembly 20 is closer to the central axis A, a degree of bending (for example, a radius of curvature) of the electrode assembly 20 increases, and therefore, the central hole 160h may be provided to prevent damage of the electrode assembly 20.

In addition, the central hole 160h may be a passage for injecting an electrolyte. That is, the electrolyte may be injected through the central hole 160h to impregnate the electrode assembly 20.

In the present disclosure, the first electrode 21 may mean either a positive electrode or a negative electrode, and the second electrode 22 may mean the other electrode.

The battery cell 100 may include a current collector 140 electrically connecting the terminal portion 130 and the electrode assembly 20. The current collector 140 may include a first current collector 141 electrically connecting the first electrode 21 and the terminal portion 130, and a second current collector 142 electrically connecting the second electrode 22 and the case 110, 120 or the side portion 113. Alternatively, the second current collector 142 may electrically connect the cap assembly 120 and the electrode assembly 20.

In addition, in order to electrically insulate the case 110, 120 and the first current collector 141, the battery cell 100 may further include an insulating cover 119 between the flat portion 111 and the first current collector 141.

In addition, the battery cell 100 may further include an insulating member 125 for electrically insulating the cap assembly 120 and the housing 110.

The cap assembly 120 may have a disc shape centered on the central axis A. In addition, the cap assembly 120 may include an injection hole 128 penetrating the cap assembly 120 along the central axis A.

The injection hole 128 may be used to inject an electrolyte into the inside of the housing 110. The battery cell 100 may further include a spherical closing portion 129 closing the injection hole 128 after injection of the electrolyte.

The electrolyte (EL) may be injected through the injection hole 128 after the cap assembly 120 is coupled to the housing 110 and before the injection hole 128 is closed.

However, alternatively, the electrolyte (EL) may also be injected into the inside of the housing 110 through the opening 115 before the cap assembly 120 is coupled.

That is, the electrolyte (EL) may be injected before or after the cap assembly 120 is coupled. Whether the electrolyte (EL) is injected through the opening 115 or through the injection hole 128, the electrolyte (EL) may eventually be injected through the central hole 160h.

FIG. 3 is an example of an electrode assembly according to the present disclosure before the first flags and the second flags are bent.

The electrode assembly 20 according to the present disclosure may include a first electrode 21, a second electrode 22, and a separator 25 disposed between the first electrode 21 and the second electrode 22.

The first electrode 21 may have either a positive or a negative electrical polarity, and the second electrode 22 may have the other electrical polarity. The separator 25 may be provided to electrically separate the first electrode 21 and the second electrode 22. In addition, the separator 25 may surround an outermost portion of the wound electrode assembly 20 to electrically separate the electrode assembly 20 and the housing 110.

For the purpose of explanation, the present disclosure refers to a direction in which any one of the electrode assembly 20, the first electrode 21, or the second electrode 22 is wound in a roll form toward the central axis A (or the central hole 160h, see FIG. 2) based on the central axis A (or the central hole 160h, see FIG. 2) as a spiral direction DR. In the present specification, the spiral direction DR may also mean, in context, an opposite direction (or an unwinding direction) away from the central axis A.

In addition, for the purpose of explanation, the present disclosure refers to a direction parallel to the central axis A as a first direction, and a radial direction based on the central axis A as a second direction. For example, the first direction and the second direction may respectively mean a height direction and a radial direction in a cylindrical coordinate system.

Specifically, the first electrode 21 may include a first electrode plate 215 on which any one active material 211 is stacked, and a plurality of first flags 210 extending from the first electrode plate 215 along the first direction parallel to the central axis A and arranged along the spiral direction DR.

Meanwhile, the second electrode 22 may further include a plurality of second flags 220 extending from the second electrode plate 225 in a direction opposite to an extending direction of the plurality of first flags 210.

In addition, the plurality of second flags 220 may respectively extend from the second electrode plate 225 in a direction opposite to a direction in which the plurality of first flags 210 extend, and may be bent toward the central axis.

More specifically, the second electrode 22 may include a second electrode plate 225 on which the other active material 221 is stacked, and the plurality of second flags 220 extending from the second electrode plate 225 in a direction opposite to a direction in which the plurality of first flags 210 extend.

The plurality of first flags 210 and the plurality of second flags 220 may have shapes symmetrical to each other.

For example, the plurality of first flags 210 may be provided in a trapezoidal shape, and a portion corresponding to any one of oblique sides of the trapezoidal shape may be parallel to the first direction. That is, the portion corresponding to any one of the oblique sides of the trapezoidal shape may be perpendicular to the second direction and the spiral direction. A portion corresponding to any one of the oblique sides of the trapezoidal shape may be provided obliquely with respect to the first direction.

In addition, in each of the plurality of first flags 210, an oblique side among two sides of the trapezoidal shape may be positioned closer to the central axis A along the spiral direction DR than a side parallel to the first direction.

The plurality of second flags 220 may also have the same shape as the plurality of first flags 210.

Through the trapezoidal shape, the plurality of first flags 210 may minimize an overlapping region with each other when bent. Likewise, the plurality of second flags 220 may also minimize an overlapping region with each other when bent.

In addition, the plurality of first flags 210 and the plurality of second flags 220 may protrude in different directions. This is to prevent a short between the plurality of first flags 210 and the plurality of second flags 220.

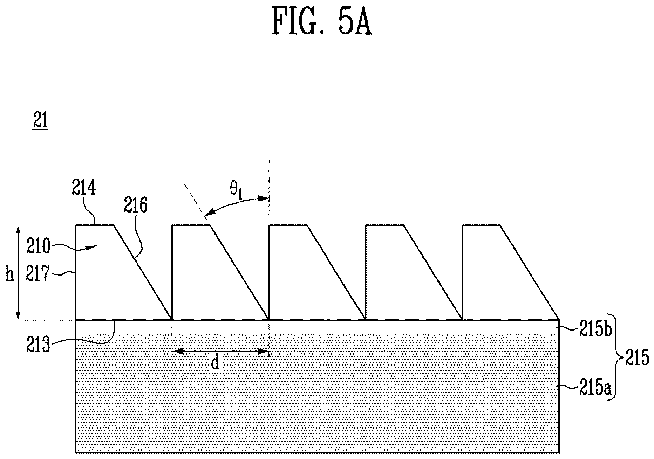

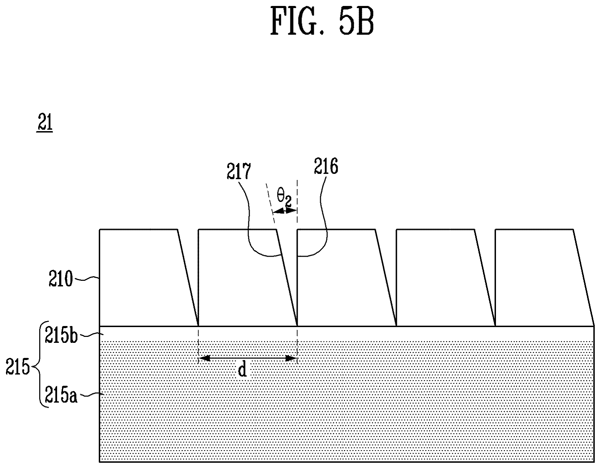

In addition, the first electrode plate 215 may include a first region 215a (see FIG. 5A) in which any one active material 211 is stacked, and a second region 215b (see FIG. 5B) formed between the plurality of first flags 210 and the first region 215a.

The second region 215b may be a bare region in which the any one active material 211 is not coated, so that the first electrode plate 215 of a metal material is exposed to air or an electrolyte as it is.

The first region 215a may be a region in which the first electrode plate 215 is covered or hidden by the any one active material 211.

That is, in the first region 215a, the any one active material may face the separator 25, and in the second region 215b, the first electrode plate 215 may face the separator 25.

The second region 215b is to prevent the any one active material 211 from being separated from the first electrode plate 215 when the first flag 210 is bent toward the central axis A, and to facilitate folding of the first flag 210.

That is, the first electrode 21 may be wound in a roll form along the spiral direction DR. The second electrode 22 and the separator 25 may also be the same.

That is, the first electrode 21, the second electrode 22, and the separator 25 may be stacked and then wound in a roll form along the spiral direction DR.

Meanwhile, unless otherwise specified, the description of the first region 215a and the second region 215b may also be equally applied to the second electrode 22.

Referring to FIGS. 2 and 3, the electrode assembly 20 according to the present disclosure may further include a first current collector 141 electrically connected to the plurality of first flags 210.

The plurality of first flags 210 may be electrically connected to the first current collector 141 by the plurality of bent first flags 210.

Accordingly, the battery cell 100 according to the present disclosure may further include the first current collector 141 electrically connecting the plurality of first flags 210 and the terminal portion 130.

The first current collector 141 and the plurality of first flags 210 may be connected by welding. A welding method for coupling the first current collector 141 and the plurality of first flags 210 may be ultrasonic welding or laser welding.

In addition, referring to FIGS. 2 and 3, the electrode assembly 20 according to the present disclosure may further include a second current collector 142, which is located in a direction opposite to the first current collector 141 with the first electrode 21, the second electrode 22, and the separator 25 interposed therebetween, and electrically connected to the second electrode 22.

In addition, the second electrode 22 may further include a plurality of second flags 220 extending from the second electrode plate 225 in a direction opposite to a direction in which the plurality of first flags 210 extend, and the plurality of second flags 220 may be bent toward the central axis A and electrically connected to the second current collector 142.

Likewise, the battery cell 100 according to the present disclosure may further include the second current collector 142, which is located in a direction opposite to the first current collector 141 with the first electrode 21, the second electrode 22, and the separator 25 interposed therebetween, and electrically connecting the second electrode 22 and the case 110, 120.

In addition, the electrode assembly 20 may include the separator 25 stacked between the first electrode 21 and the second electrode 22. For this purpose, the separator 25 may be formed of an insulating material.

FIG. 3 illustrates an example in which the first electrode 21, the second electrode 22, and the separator 25 are each formed as one sheet, stacked, and then wound like a scroll. However, alternatively, the first electrode 21, the second electrode 22, and the separator 25 may be sequentially stacked (or laminated) a plurality of times and then have a bent shape according to a shape of the housing 110.

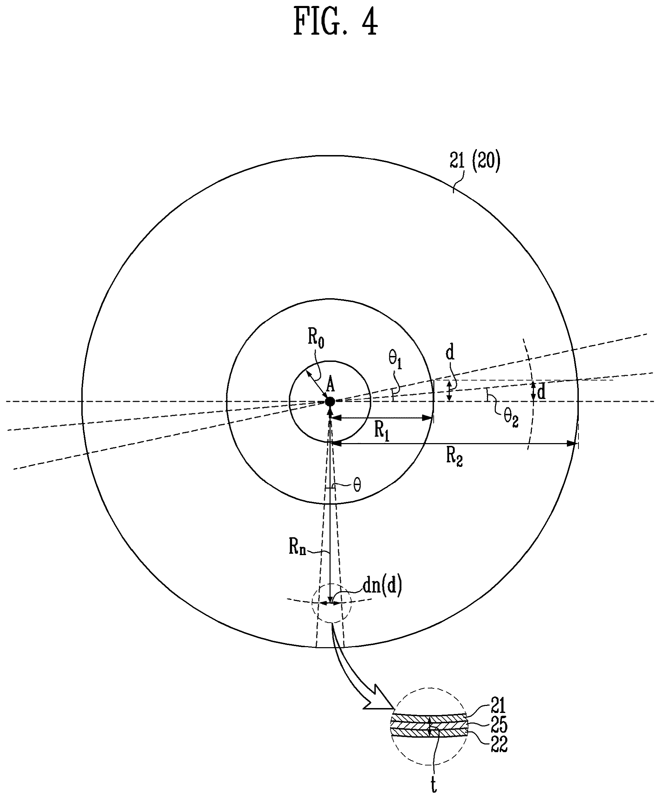

FIG. 4 illustrates an outline of an electrode assembly according to the present disclosure viewed from one direction.

FIG. 4 illustrates an example in which the electrode assembly 20 is wound circularly around the central axis A. Accordingly, the first electrode 21 may also be wound circularly around the central axis A.

As described above, in the first electrode 21, the plurality of first flags 210 may be bent toward the central axis A. Likewise, in the second electrode 22, the plurality of second flags 220 may be bent toward the central axis A.

When the plurality of first flags 210 are bent, adjacent first flags 210 may overlap each other. In order to remove unnecessary overlapping portions or to prevent the unnecessary overlapping portions from increasing, it is necessary to vary an angle between the adjacent first flags 210.

In order to set different angles between the adjacent first flags 210, assuming that the first electrode plate 215 is in an unfolded sheet form before being wound, the following Mathematical Formula 1 may be established.

[Mathematical Formula 1]

$$S = \pi\left(R_n{}^2 - R_0{}^2\right) = t \times L_n$$

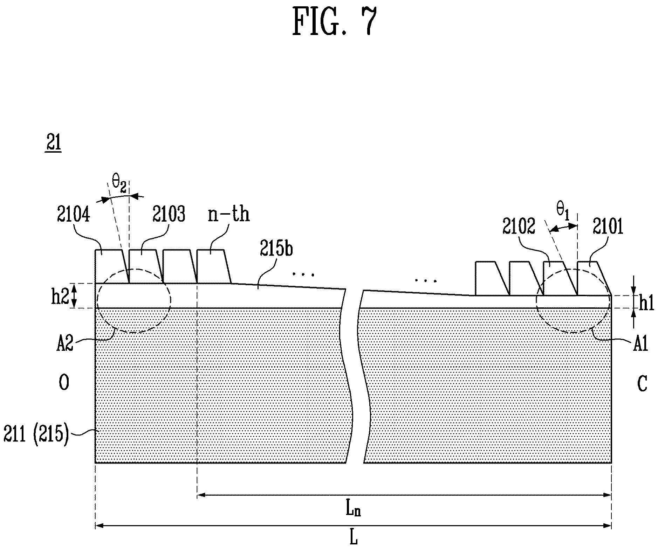

In the Mathematical Formula 1, $L_n$ (n is a natural number) may be a length from one end of the first electrode plate 215, which is closer to the central axis A among both ends of the first electrode plate 215, to an n-th first flag 210 disposed thereon (see FIG. 7), $R_n$ may be a radius from the central axis A to the n-th first flag 210 disposed thereon in a wound state, $R_0$ may be a radius from the central axis A to one end of the first electrode plate 215, which is closer to the central axis A among both ends of the first electrode plate 215, in the wound state, t may be a sum of thicknesses of the first electrode 21, the second electrode 22, and the separator 25, and $\theta$ may mean an angle between any one of the first flags 210 and another first flag 210 adjacent to the any one of the first flags 210, or an angle between a pair of adjacent first flags 210.

For reference, $L_n$ may be a distance from one end of the first electrode plate 215 adjacent to the central axis A to the n-th first flag 210 disposed thereon. Accordingly, $R_n$ may be a radius to the n-th first flag 210 disposed thereon.

More specifically, $L_n$ may be a length including a length $d_n$ of the n-th disposed first flag 210.

Here, the any one first flag 210 may be the n-th disposed first flag 210, and the first flag 210 adjacent to the any one first flag 210 may be the (n-1)-th disposed first flag 210 (except when n is 1).

In addition, more specifically, $\theta$ is an angle between any one of the first flags 210 and another first flag 210 adjacent to the any one of the first flags 210, or an angle between a pair of adjacent first flags 210, and at the same time, since it is identical to an angle formed by a first edge portion 216 and a second edge portion 217 of the any one first flag 210, which are in an alternate-angle relationship, with the central axis A, the following Mathematical Formula 2 may be established.

[Mathematical Formula 2]

$$\theta = \arctan\left(\frac{d_n}{R_n}\right)$$

In the Mathematical Formula 2, $R_n$ may be a radius from the central axis A to the n-th disposed first flag 210, $d_n$ may be a length connected between the n-th disposed first flag 210 and the first electrode plate 215 (or a length of a portion where the n-th first flag 210 meets the first electrode plate 215, or a length of a connection edge portion 213, see FIG. 5A), and $\theta$ may mean an angle between the n-th disposed first flag 210 and another first flag 210 adjacent to the n-th disposed first flag 210, or an angle between a pair of adjacent first flags 210.

The angle between any one of the first flags 210 and a first flag 210 adjacent to the any one of the first flags 210, or the angle between a pair of adjacent first flags 210, may be set according to the following Equation 1 derived from the Mathematical Formula 1 and the Mathematical Formula 2.

[Equation 1]

$$\theta = arctan\left(\frac{d_n}{\sqrt{\frac{tL_n}{\pi} + R_0{}^2}}\right)$$

In the Equation 1, $L_n$ (n is a natural number) may be a length from one end of the first electrode plate 215, which is closer to the central axis A among both ends of the first electrode plate 215, to an n-th disposed first flag 210 (see FIG. 7), $R_0$ may be a radius from the central axis A to one end of the first electrode plate 215, which is closer to the central axis A among both ends of the first electrode plate 215, in a wound state, $d_n$ may be a length connected between the n-th disposed first flag 210 and the first electrode plate 215, t may be a sum of thicknesses of the first electrode 21, the second electrode 22, and the separator 25, and $\theta$ may mean an angle between any one of the first flags 210 and another first flag 210 adjacent to the any one of the first flags 210, or an angle between a pair of adjacent first flags 210.

$d_n$, in other words, may be a length of a connection edge portion 213 (see FIG. 5A) of the n-th disposed first flag 210.

Meanwhile, if the $d_n$ of the n-th disposed first flag 210 has the same value as d for the other first flags 210, the Equation 1 may be modified as the following Equation 2.

[Equation 2]

$$\theta = arctan\left(\frac{d}{\sqrt{\frac{tL_n}{\pi} + R_0{}^2}}\right)$$

Referring to either the Equation 1 or the Equation 2, an angle between any one of the first flags 210 and another first flag 210 adjacent to the any one of the first flags 210 may increase as the any one of the first flags 210 becomes closer to the central axis A along the spiral direction DR of the other first flag 210.

In addition, the angle may be an angle between a second edge portion 217 of the any one of the first flags 210 and a first edge portion 216 of the first flag 210 adjacent to the any one of the first flags 210.

In one example, the angle may be an angle before the plurality of first flags 210 are bent. Therefore, the angle before bending between the second edge portion 217 of the any one of the first flags 210 and the first edge portion 216 of the first flag 210 adjacent to the any one of the first flags 210 may increase as the any one of the first flags 210 and the first flag 210 adjacent to the any one of the first flags 210 become closer to the central axis A.

A wound length L of the first electrode plate 215 may vary depending on a size of the battery cell 100. At this time, when the angle $\theta$ and the length $d_n$ connected between the n-th disposed first flag 210 and the first electrode plate 215 are set each time without an organic relationship, efficiency of a battery manufacturing process may be deteriorated.

In order to prevent this, when a length $L_n$ from one end of the first electrode plate 215 close to the central axis A among both ends of the first electrode plate 215 to the n-th disposed first flag 210 along the spiral direction is equated with a length L of the first electrode plate 215 (see FIG. 7), an angle $\theta$ between any one of the first flags 210 (or the n-th disposed first flag 210) and another first flag 210 adjacent to the any one of the first flags 210, and a length $d_n$ connected between the any one of the first flags 210 and the first electrode plate 215 may be formed based on the Equation 1.

Therefore, even if a size of the electrode assembly 20 changes in a manufacturing process, since the angle $\theta$ according to the length $d_n$ of the n-th disposed first flag 210 or the length of the n-th disposed second flag 220 is directly calculated using the Equation 1, the manufacturing process of the electrode assembly 20 may manufacture the first electrode plate 215 and the second electrode plate 225 by reflecting the angle $\theta$ according to the length $d_n$ of the n-th disposed first flag 210.

In one example, the angle $\theta$ between any one of the first flags and another first flag adjacent to the any one of the first flags may vary depending on the length $L_n$ from one end of the first electrode plate close to the central axis among both ends of the first electrode plate to the n-th (n is a natural number) disposed first flag.

Referring to FIG. 4, in one example, an angle $\theta_1$ of the first flag 210 located at $R_1$ along the second direction with respect to the central axis A may be greater than an angle $\theta_2$ of the first flag 210 located at $R_2$ along the second direction.

In addition, as described above, when an alternate angle relationship is used, an angle between a second edge portion 217 of any one of the first flags 210 and a first edge portion 216 of another first flag 210 adjacent to the any one of the first flags 210 may be an angle formed with respect to the central axis A by both edge portions 216, 217 (see FIG. 5A) of the any one of the first flags 210, namely the first edge portion 216 and the second edge portion 217. Accordingly, the angle formed with respect to the central axis A by both edge portions, namely the first edge portion 216 and the second edge portion 217 of the any one of the first flags 210, may increase as the any one of the first flags 210 approaches the central axis A.

That is, the electrode assembly 20 according to the present disclosure may include: a first electrode 21 including a first electrode plate 215 on which one active material is stacked and a plurality of first flags 210 respectively extending from the first electrode plate 215; a second electrode 22 including a second electrode plate 225 on which another active material is stacked; and a separator 25 disposed between the first electrode 21 and the second electrode 22. The first electrode 21, the separator 25, and the second electrode 22 may be wound with respect to an imaginary central axis A, and the plurality of first flags 210 may respectively extend in parallel with the central axis A.

In addition, an angle between any one of the first flags 210 and another first flag 210 adjacent to the any one of the first flags 210 may increase as the any one of the first flags 210 approaches the central axis A along a spiral direction DR, which is a direction in which the first electrode 21 is wound.

In another example, the electrode assembly 20 according to the present disclosure may comprise: a first electrode 21 including a first electrode plate 215 on which one active material is stacked and a plurality of first flags 210 respectively extending from the first electrode plate 215; a second electrode 22 including a second electrode plate 225 on which another active material is stacked; and a separator 25 disposed between the first electrode 21 and the second electrode 22. The first electrode 21, the separator 25, and the second electrode 22 may be wound with respect to an imaginary central axis A, and the plurality of first flags 210 may respectively extend in parallel with the central axis A.

In addition, along a spiral direction DR, which is a direction in which the first electrode 21 is wound, an angle between a pair of adjacent first flags 210 in a first portion A1 (see FIG. 7) adjacent to the central axis A among the plurality of first flags 210 may be greater than an angle between a pair of adjacent first flags 210 in a second portion A2 (see FIG. 7) located farther from the central axis A than the first portion A1.

In still another example, the electrode assembly 20 according to the present disclosure may comprise: a first electrode 21 including a first electrode plate 215 on which one active material is stacked and a plurality of first flags 210 respectively extending from the first electrode plate 215; a second electrode 22 including a second electrode plate 225 on which another active material is stacked; and a separator 25 disposed between the first electrode 21 and the second electrode 22. The first electrode 21, the separator 25, and the second electrode 22 may be wound with respect to an imaginary central axis A, and each of the plurality of first flags 210 may include a first edge portion 216 extending obliquely with the central axis A and a second edge portion 217 extending in parallel with the central axis A. Each of the plurality of first flags 210 may be bent such that the first edge portion 216 and the second edge portion 217 face the central axis A, so that an angle formed with respect to the central axis A by the first edge portion 216 and the second edge portion 217 may increase as the first flag 210 approaches the central axis A along the spiral direction DR, which is a direction in which the first electrode 21 is wound.

Accordingly, the battery cell 100 according to the present disclosure may include: a case 110, 120 accommodating the electrode assembly 20; a through-hole (not shown) penetrating one surface of the case along the central axis; and a terminal portion 130 inserted into the through-hole and electrically connecting the electrode assembly 20 to the outside.

FIG. 5A is an enlarged view of a first portion adjacent to the central axis among the first electrode.

The first portion A1 (see FIG. 7) may be a region of the first electrode 21 located closer to the central axis A than an outermost portion of the case 110, 120 or the electrode assembly 20 along the spiral direction DR.

The first electrode plate 215 may include a first region 215a in which one active material 211 (see FIG. 3) is stacked to face the separator 25, and a second region 215b formed between the plurality of first flags 210 and the first region 215a, the second region 215b being exposed so as to face the separator 25.

Referring to FIG. 5A, each of the plurality of first flags 210 may include: a first edge portion 216 extending obliquely with the first direction; a second edge portion 217 extending in parallel with the first direction; a third edge portion 214 extending in parallel with the spiral direction DR and connected to the first edge portion 216 and the second edge portion 217; and a connection edge portion 213 connecting the second region 215b and the plurality of first flags 210.

As described above, in the present disclosure, a length of the connection edge portion 213 along the spiral direction DR at a boundary where the second region 215b meets the connection edge portion 213 is referred to as d.

The lengths of the respective connection edge portions 213 of the plurality of first flags 210 may be the same length.

In addition, in the first electrode plate 215, the heights h of the plurality of first flags 210 along the central axis may be the same length.

This is because, when bending the plurality of first flags 210, assuming that the electrode assembly 20 is cylindrical, the overlapping of the plurality of first flags 210 along the radial direction (or the second direction) with respect to the central axis is optimized. If the plurality of first flags 210 overlap too much in the second direction, the stepped difference of the plurality of bent first flags 210 facing the first current collector 141 becomes severe, and thus the plurality of first flags 210 may not be uniformly welded to the first current collector 141. As a result, a problem of structural stability may occur in the electrode assembly 20 or the battery cell 100.

In addition, when any one of the plurality of first flags 210 according to the present disclosure is bent, the one first flag 210 may not overlap with another first flag 210 disposed adjacent thereto along the spiral direction. Accordingly, the current density per unit area of the current flowing toward the first current collector 141 from the plurality of first flags 210 can be reduced, thereby improving a heat generation problem occurring during current flow.

That is, one of the plurality of first flags 210 and an adjacent first flag 210 may form a coplanar surface (or coplanar plane).

In the present disclosure, the coplanar surface means a smooth or continuous surface formed when adjacent first flags 210 along the spiral direction are bent without a step difference.

In addition, the first edge portion 216 may be closer to the central axis A than the second edge portion 217 along the spiral direction DR.

Meanwhile, in the present disclosure, the angle formed by the first edge portion 216 and the second edge portion 217 of any one of the first flags 210 in the first portion A1 is referred to as a first angle $\theta 1$. By using the skewed angle relationship, the first angle $\theta 1$ may be an angle formed by the first edge portion 216 of any one of the first flags 210 in the first portion A1 and the second edge portion 217 of another first flag 210 adjacent to the one first flag 210.

FIG. 5B is an enlarged view of a second portion located farther from the central axis than the first portion among the first electrode.

The second portion A2 (see FIG. 7) may be a region of the first electrode 21 located closer to the outermost side of the case 110, 120 or the electrode assembly 20 than to the central axis A along the spiral direction DR. Accordingly, the second portion A2 may be located farther from the central axis A than the first portion A1.

As described above, the first electrode plate 215 may include a first region 215a on which any one of the active materials 211 is stacked, and a second region 215b formed between the plurality of first flags 210 and the first region 215a.

In addition, in the present disclosure, an angle formed by the first edge portion 216 and the second edge portion 217 of any one of the first flags 210 in the second portion A2 is referred to as a second angle θ2. Similarly, by using the skewed angle relationship, the second angle θ2 may be an angle formed by the first edge portion 216 of any one of the first flags 210 in the second portion A2 and the second edge portion 217 of another first flag 210 adjacent to the one first flag 210.

Referring to FIGS. 5A and 5B, the first angle may be greater than the second angle. That is, along the spiral direction DR, the angle formed by the first edge portion 216 of any one of the first flags 210 and the second edge portion 217 of another first flag 210 adjacent to the one first flag 210 may increase as it becomes closer to the central axis A.

The angle formed by the first edge portion 216 of any one of the first flags 210 and the second edge portion 217 of the first flag 210 adjacent to the one first flag 210 may gradually increase.

Alternatively, the angle formed by the first edge portion 216 of any one of the first flags 210 and the second edge portion 217 of another first flag 210 adjacent to the one first flag 210 may increase stepwise. That is, along the spiral direction DR, the plurality of first flags 210 may be divided into predetermined sections, and while the angle between the first flags 210 belonging to any one section maintains the same second angle, the angle between the first flags 210 belonging to another section located closer to the central axis A than the one section may maintain a first angle greater than the second angle.

For example, the plurality of first flags 210 may be grouped in a predetermined number and divided into a plurality of first flag groups. While the angles between the first flags 210 belonging to the same first flag group are identical to each other, the angles between the first flags 210 belonging to different first flag groups may differ from one another.

That is, along the spiral direction DR, the angle between the first flags 210 belonging to any arbitrary first flag group may increase as it becomes closer to the central axis A.

In addition, in any one first flag group, the difference between the angle formed between one pair of adjacent first flags 210 and the angle formed between another pair of adjacent first flags 210 may be the same.

However, alternatively, as it becomes closer to the central axis A, the difference between the angle formed between one pair of adjacent first flags 210 and the angle formed between another pair of adjacent first flags 210 in any one first flag group may increase.

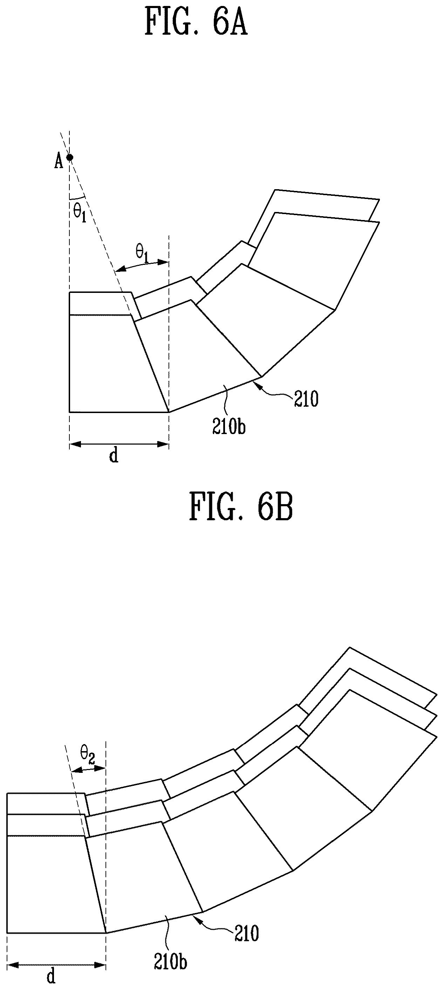

FIG. 6A illustrates the first flags bent toward the central axis at the first portion.

Referring to FIGS. 3 and 6A, the plurality of first flags 210 may include a first surface 210a facing the central axis A and a second surface 210b facing a direction opposite to a second surface 210b.

Accordingly, after the plurality of first flags 210 are bent, the first surface 210a may face the first electrode plate 215, while the second surface 210b may be exposed to the outside or may face one surface of the case 110, 120.

Referring to FIGS. 4 and 6A, in the first portion A1, a first angle θ1, which is an angle between one of the first flags 210 and another adjacent first flag 210, may mathematically be an alternate angle with an angle between both edge portions 216 and 217 (see FIG. 5A) of the one first flag 210.

FIG. 6B illustrates the first flags bent toward the central axis at the second portion.

Similarly, referring to FIGS. 4 and 6B, in the second portion A2, a second angle θ2, which is an angle between one of the first flags 210 and another adjacent first flag 210, may mathematically be an alternate angle with an angle between both edge portions 216 and 217 (see FIG. 5A) of the one first flag 210.

Accordingly, an angle formed by both edge portions 216 and 217 of one of the first flags 210 located in the first portion A1 with the central axis A may be greater than an angle formed by both edge portions 216 and 217 of one of the first flags 210 located in the second portion A2 with the central axis A.

FIG. 7 is another example of the first electrode according to the present disclosure.

FIG. 7 illustrates an example in which the first electrode 21 wound is unfolded. Along the spiral direction DR, the side closer to the central axis A is referred to as a central portion C, and the side closer to the outermost side of the electrode assembly 20 is referred to as an outer portion O.

For example, the first portion A1 may be a region located closer to the central portion C than the outer portion O, and the second portion A2 may be a region located closer to the outer portion O than the central portion C.

Referring to FIG. 7, in the first portion A1 adjacent to the central axis A, a height h1 of the second region 215b may be smaller than a height h2 of the second region 215b in the second portion A2 located farther from the central axis A than the first portion A1.

This is to facilitate bending of one of the first flags 210 located closer to the outer portion O by setting the bending height of the one first flag 210 located closer to the outer portion O differently.

That is, among the plurality of first flags 210 bent toward the central axis A, the first flags 210 located at the central portion C or closer to the central axis A may be bent first, and then the first flags 210 located closer to the outer portion O may be bent. Accordingly, in order to easily couple the first flags 210 located closer to the outer portion O while maintaining the bent shape after bending, it is necessary to increase the height of the first flag 210 located closer to the outer portion O compared to the first flags 210 located closer to the central axis A along the direction parallel to the central axis A.

The variation in the length of the second region 215b may be gradual, but may change stepwise. That is, the length of the second region 215b may be constant in one section, but may vary in another section.

In addition, along the spiral direction in which the first electrode 21 is wound, an angle between a pair of adjacent first flags 210 in the first portion A1 adjacent to the central axis A may be greater than an angle between a pair of adjacent first flags 210 in the second portion A2 located farther from the central axis A than the first portion A1.

That is, from the second portion A2 toward the first portion A1, the angle between a pair of adjacent first flags 210 among the plurality of first flags 210 may increase.

In one embodiment, the plurality of first flags 210 are partitioned into a plurality of first flag groups by grouping adjacent first flags 210 into a predetermined number, and the angle between a pair of first flags 210 included in the same first flag group is the same, but from the second portion A2 toward the first portion A1, the angle between a pair of first flags 210 included in one first flag group may increase.

As described above, when comparing an angle between a first-first flag 2101 and a first-second flag 2102 adjacent to each other in the first portion A1 with an angle between a first-third flag 2103 and a first-fourth flag 2104 adjacent to each other in the second portion A2, the angle between the first-first flag 2101 and the first-second flag 2102 may be greater than the angle between the first-third flag 2103 and the first-fourth flag 2104.

Specifically, FIG. 7 illustrates the first-first flag 2101, the first-second flag 2102 which is adjacent to the first-first flag 2101 but located farther from the central axis A than the first-first flag 2101 along the spiral direction DR, the first-third flag 2103 which is located farther from the central axis A than the first-second flag 2102 along the spiral direction DR, and the first-fourth flag 2104 which is adjacent to the first-third flag 2103 but located farther from the central axis A than the first-third flag 2103 along the spiral direction DR. However, this is merely an example, and the positions of the first-first flag 2101, the first-second flag 2102, the first-third flag 2103, and the first-fourth flag 2104 are not limited thereto.

In addition, a first angle $\theta1$ between the first-first flag 2101 and the first-second flag 2102 may be greater than a second angle $\theta2$ between the first-third flag 2103 and the first-fourth flag 2104.

It is understood by those skilled in the art that the plurality of exemplary embodiments described above are specific examples of the following aspects.

Aspect 1. An electrode assembly comprising: a first electrode including a plurality of first flags respectively extending from a first electrode plate on which any one active material is stacked; a second electrode including a second electrode plate on which the other active material is stacked; and a separator disposed between the first electrode and the second electrode, wherein the first electrode, the separator, and the second electrode are wound around a virtual central axis, wherein the plurality of first flags respectively extend parallel to the central axis, and wherein an angle between any one first flag of the plurality of first flags and another first flag adjacent to the any one first flag increases as approaching the central axis along a spiral direction, which is a winding direction of the first electrode.

Aspect 2. The electrode assembly according to aspect 1, wherein the second electrode further includes a plurality of second flags extending from the second electrode plate in a direction opposite to a direction in which the plurality of first flags extend, and being bent toward the central axis.

Aspect 3. The electrode assembly according to aspect 1 or 2, wherein the first electrode plate includes: a first region in which any one active material is stacked to face the separator; and
a second region formed between the plurality of first flags and the first region, the first electrode plate being exposed in the second region to face the separator.

Aspect 4. The electrode assembly according to any one of the previous aspects, wherein a height of the second region at a first portion adjacent to the central axis is smaller than a height of the second region at a second portion located farther from the central axis than the first portion.

Aspect 5. The electrode assembly according to any one of the previous aspects, wherein each of the plurality of first flags includes: a first edge portion extending obliquely with respect to the central axis; a second edge portion extending parallel to the central axis; a third edge portion connected to the first edge portion and the second edge portion along the spiral direction; and a connection edge portion connecting the second region and the plurality of first flags.

Aspect 6. The electrode assembly according to aspect 5, wherein the angle is an angle between a second edge portion of any one of the first flags and a first edge portion of a first flag adjacent to the any one of the first flags, optionally, wherein lengths of the connection edge portions of the plurality of first flags are the same or, optionally, wherein the first edge portion is closer to the central axis than the second edge portion along the spiral direction or, optionally, wherein heights of the plurality of first flags are the same.

Aspect 7. The electrode assembly according to any one of the previous aspects, wherein an angle $\theta$ between any one of the first flags and a first flag adjacent to the any one of the first flags satisfies the following

Equation 1:

[Equation 1]

$$\theta = arctan\left(\frac{d_n}{\sqrt{\frac{tL_n}{\pi} + R_0^2}}\right)$$

wherein, in the Equation 1, $L_n$ (n is a natural number) is a length from one end of the first electrode plate, which is closer to the central axis among both ends of the first electrode plate, to an n-th first flag; $R_0$ is a radius from the central axis to one end of the first electrode plate, which is closer to the central axis among both ends of the first electrode plate, when the first electrode plate is wound around the central axis; $d_n$ is a length connected between the n-th disposed first flag and the first electrode plate; and t is a sum of thicknesses of the first electrode, the second electrode, and the separator.

Aspect 8. The electrode assembly according to any one of the previous aspects, wherein an angle $\theta$ between any one of the first flags and a first flag adjacent to the any one of the first flags varies according to a length $L_n$ from one end of the first electrode plate, which is closer to the central axis among both ends of the first electrode plate, to an n-th first flag (n is a natural number).

Aspect 9. The electrode assembly according to any one of the previous aspects, wherein the plurality of first flags respectively extend parallel to the central axis, and an angle between a pair of adjacent first flags at a first portion adjacent to the central axis along a spiral direction, which is a winding direction of the first electrode, is greater than an angle between a pair of adjacent first flags at a second portion located farther from the central axis than the first portion, optionally, wherein the angle between a pair of adjacent first flags among the plurality of first flags increases from the second portion toward the first portion.

Aspect 10. The electrode assembly according to any one of the previous aspects, wherein the plurality of first flags are partitioned into a plurality of first flag groups by grouping adjacent first flags by a predetermined number, wherein an angle between a pair of first flags included in the same first flag group among the plurality of first flag groups is the same, and wherein an angle between a pair of first flags included in any one first flag group increases toward the central axis.

Aspect 11. The electrode assembly according to any one of the previous aspects, wherein each of the plurality of first flags includes a first edge portion extending obliquely with respect to the central axis and a second edge portion extending parallel to the central axis, and wherein each of the plurality of first flags is bent such that the first edge portion and the second edge portion face the central axis, and an angle formed by the first edge portion and the second edge portion with respect to the central axis increases as approaching the central axis along a spiral direction, which is a winding direction of the first electrode.

Aspect 12. The electrode assembly according to any one of the previous aspects, further comprising a first current collector electrically connecting the plurality of first flags and a terminal portion, wherein the plurality of first flags and the first current collector are bonded to each other by welding.

Aspect 13. The electrode assembly according to any one of the previous aspects, further comprising a second current collector which is located in a direction opposite to the first current collector with the first electrode, the second electrode, and the separator interposed therebetween, and electrically connected to the second electrode, optionally, wherein the second electrode further includes a plurality of second flags extending from the second electrode plate in a direction opposite to a direction in which the plurality of first flags extend, and the plurality of second flags are bent toward the central axis and electrically connected to the second current collector.

Aspect 14. The electrode assembly according to any one of the previous aspects, wherein any one of the first flags among the plurality of first flags and another first flag adjacent to the any one of the first flags are bent to form a coplanar surface with each other.

Aspect 15. A battery cell comprising: an electrode assembly according to any one of the previous aspects; a case accommodating the electrode assembly; a through-hole penetrating one surface of the case along the central axis; and a terminal portion inserted into the through-hole and electrically connecting the electrode assembly to the outside.

The present disclosure may be embodied in various forms, and the scope of the rights is not limited to the above-described embodiments. Therefore, if a modified embodiment includes the elements of the claims of the present disclosure, it should be construed as being within the scope of the present disclosure.

**Claims**

1. An electrode assembly comprising:

   a first electrode including a plurality of first flags respectively extending from a first electrode plate on which any one active material is stacked;
   a second electrode including a second electrode plate on which the other active material is stacked; and
   a separator disposed between the first electrode and the second electrode,
   wherein the first electrode, the separator, and the second electrode are wound around a virtual central axis,
   wherein the plurality of first flags respectively extend parallel to the central axis, and

wherein an angle between any one first flag of the plurality of first flags and another first flag adjacent to the any one first flag increases as approaching the central axis along a spiral direction, which is a winding direction of the first electrode.

2. The electrode assembly according to claim 1, wherein the second electrode further includes a plurality of second flags extending from the second electrode plate in a direction opposite to a direction in which the plurality of first flags extend, and being bent toward the central axis.

3. The electrode assembly according to claim 1 or 2, wherein the first electrode plate includes:

   a first region in which any one active material is stacked to face the separator; and
   a second region formed between the plurality of first flags and the first region, the first electrode plate being exposed in the second region to face the separator.

4. The electrode assembly according to any one of the previous claims, wherein a height of the second region at a first portion adjacent to the central axis is smaller than a height of the second region at a second portion located farther from the central axis than the first portion.

5. The electrode assembly according to any one of the previous claims, wherein each of the plurality of first flags includes:

   a first edge portion extending obliquely with respect to the central axis;
   a second edge portion extending parallel to the central axis;
   a third edge portion connected to the first edge portion and the second edge portion along the spiral direction; and
   a connection edge portion connecting the second region and the plurality of first flags.

6. The electrode assembly according to claim 5, wherein the angle is an angle between a second edge portion of any one of the first flags and a first edge portion of a first flag adjacent to the any one of the first flags,

   optionally, wherein lengths of the connection edge portions of the plurality of first flags are the same or,
   optionally, wherein the first edge portion is closer to the central axis than the second edge portion along the spiral direction or, optionally, wherein heights of the plurality of first flags are the same.

7. The electrode assembly according to any one of the previous claims, wherein an angle θ between any one of the first flags and a first flag adjacent to the any one of the first flags satisfies the following Equation 1:

[Equation 1]

$$\theta = arctan\left(\frac{d_n}{\sqrt{\dfrac{tL_n}{\pi} + R_0{}^2}}\right)$$

wherein, in the Equation 1,

   $L_n$ (n is a natural number) is a length from one end of the first electrode plate, which is closer to the central axis among both ends of the first electrode plate, to an n-th first flag;
   $R_0$ is a radius from the central axis to one end of the first electrode plate, which is closer to the central axis among both ends of the first electrode plate, when the first electrode plate is wound around the central axis;
   $d_n$ is a length connected between the n-th disposed first flag and the first electrode plate; and
   t is a sum of thicknesses of the first electrode, the second electrode, and the separator.

8. The electrode assembly according to any one of the previous claims, wherein an angle θ between any one of the first flags and a first flag adjacent to the any one of the first flags varies according to a length $L_n$ from one end of the first electrode plate, which is closer to the central axis among both ends of the first electrode plate, to an n-th first flag (n is a natural number).

9. The electrode assembly according to any one of the previous claims, wherein the plurality of first flags respectively extend parallel to the central axis, and an angle between a pair of adjacent first flags at a first portion adjacent to the central axis along a spiral direction, which is a winding direction of the first electrode, is greater than an angle between a pair of adjacent first flags at a second portion located farther from the central axis than the first portion, optionally, wherein the angle between a pair of adjacent first flags among the plurality of first flags increases from the second portion toward the first portion.

10. The electrode assembly according to any one of the previous claims, wherein the plurality of first flags are partitioned into a plurality of first flag groups by grouping adjacent first flags by a predetermined number,

wherein an angle between a pair of first flags included in the same first flag group among the plurality of first flag groups is the same, and wherein an angle between a pair of first flags included in any one first flag group increases toward the central axis.

11. The electrode assembly according to any one of the previous claims,

wherein each of the plurality of first flags includes a first edge portion extending obliquely with respect to the central axis and a second edge portion extending parallel to the central axis, and

wherein each of the plurality of first flags is bent such that the first edge portion and the second edge portion face the central axis, and an angle formed by the first edge portion and the second edge portion with respect to the central axis increases as approaching the central axis along a spiral direction, which is a winding direction of the first electrode.

12. The electrode assembly according to any one of the previous claims, further comprising a first current collector electrically connecting the plurality of first flags and a terminal portion, wherein the plurality of first flags and the first current collector are bonded to each other by welding.

13. The electrode assembly according to any one of the previous claims, further comprising a second current collector which is located in a direction opposite to the first current collector with the first electrode, the second electrode, and the separator interposed therebetween, and electrically connected to the second electrode, optionally, wherein the second electrode further includes a plurality of second flags extending from the second electrode plate in a direction opposite to a direction in which the plurality of first flags extend, and the plurality of second flags are bent toward the central axis and electrically connected to the second current collector.

14. The electrode assembly according to any one of the previous claims, wherein any one of the first flags among the plurality of first flags and another first flag adjacent to the any one of the first flags are bent to form a coplanar surface with each other.

15. A battery cell comprising:

an electrode assembly according to any one of the previous claims;
a case accommodating the electrode assembly;
a through-hole penetrating one surface of the case along the central axis; and

a terminal portion inserted into the through-hole and electrically connecting the electrode assembly to the outside.

# FIG. 1

# FIG. 2

# FIG. 3

# FIG. 4

# FIG. 5A

# FIG. 5B

# FIG. 6A

# FIG. 6B

EP 4 730 457 A1

# FIG. 7

21

2104   θ₂   2103   n-th   215b

2102   θ₁   2101

h2          A2          O          211 (215)

h1   A1   C

Lₙ

L

22

## EUROPEAN SEARCH REPORT

**Application Number**

EP 25 20 9267

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 221 176 296 U (BYD CO LTD) 18 June 2024 (2024-06-18) | 1-15 | INV. H01M10/04 |
| Y | * figures 3-5 * <br> * claims 1-15 * | 5,10 | H01M10/0587 H01M50/179 H01M50/533 |
| X | WO 2024/187760 A1 (BYD CO LTD [CN]) 19 September 2024 (2024-09-19) | 1-15 | H01M50/538 |
| Y | * figures 1-8 * <br> * claims 1-3 * | 5,10 | |
| Y | EP 4 350 872 A1 (MICROVAST INC [US]) 10 April 2024 (2024-04-10) <br> * figures 2-5,9-11 * <br> * claims 1-13 * | 5 | |
| Y | EP 4 386 969 A1 (LG ENERGY SOLUTION LTD [KR]) 19 June 2024 (2024-06-19) <br> * figures 7a-10 * <br> * claims 1-22 * | 10 | |
| Y | CN 118 472 567 A (HUIZHOU EVE ENERGY CO LTD) 9 August 2024 (2024-08-09) <br> * figures 1-4 * <br> * claims 1-13 * | 10 | TECHNICAL FIELDS SEARCHED (IPC) <br><br> H01M |

The present search report has been drawn up for all claims

| Place of search | Date of completion of the search | Examiner |
|---|---|---|
| Munich | 19 February 2026 | Haering, Christian |

## ANNEX TO THE EUROPEAN SEARCH REPORT
## ON EUROPEAN PATENT APPLICATION NO.

EP 25 20 9267

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2026

| Patent document cited in search report | | Publication date | Patent family member(s) | | Publication date |
|---|---|---|---|---|---|
| CN 221176296 | U | 18-06-2024 | CN | 221176296 U | 18-06-2024 |
| | | | WO | 2025066401 A1 | 03-04-2025 |
| WO 2024187760 | A1 | 19-09-2024 | CN | 118676549 A | 20-09-2024 |
| | | | EP | 4683097 A1 | 21-01-2026 |
| | | | WO | 2024187760 A1 | 19-09-2024 |
| EP 4350872 | A1 | 10-04-2024 | CN | 113193165 A | 30-07-2021 |
| | | | EP | 4350872 A1 | 10-04-2024 |
| | | | US | 2024396181 A1 | 28-11-2024 |
| | | | WO | 2022247665 A1 | 01-12-2022 |
| EP 4386969 | A1 | 19-06-2024 | CA | 3233788 A1 | 20-04-2023 |
| | | | CN | 115986329 A | 18-04-2023 |
| | | | CN | 218867340 U | 14-04-2023 |
| | | | EP | 4386969 A1 | 19-06-2024 |
| | | | JP | 7744502 B2 | 25-09-2025 |
| | | | JP | 2024528137 A | 26-07-2024 |
| | | | KR | 20230054604 A | 25-04-2023 |
| | | | US | 2023118382 A1 | 20-04-2023 |
| | | | WO | 2023063808 A1 | 20-04-2023 |
| CN 118472567 | A | 09-08-2024 | CN | 118472567 A | 09-08-2024 |
| | | | WO | 2025245982 A1 | 04-12-2025 |

EPO FORM P0459

For more details about this annex : see Official Journal of the European Patent Office, No. 12/82